# EUROPEAN PATENT APPLICATION

(11) **EP 3 792 868 A1**
(43) Date of publication of application: **17.03.2021**
(21) Application number: 20195506.9
(22) Date of filing: 10.09.2020
(51) Int. Cl.: G06T 3/40, B62D 15/02, G08G 1/00

(54) **IMAGE PROCESSING DEVICE**

(30) Priority: 12.09.2019 JP 2019166661
(71) Applicant: AISIN SEIKI KABUSHIKI KAISHA, Kariya-shi, Aichi 448-8650 (JP)
(72) Inventor: YAMAMOTO, Kinji, Kariya-shi,, Aichi 448-8650 (JP); WATANABE, Kazuya, Kariya-shi,, Aichi 448-8650 (JP)
(74) Representative: TBK

(57) **Abstract**

An image processing device includes: an image acquisition section (30a) that acquires a captured image captured by an image capturing unit (15, 15a, 15b, 15c, 15d) that images a periphery of a vehicle (1); a position acquisition section (30b) that acquires a current position of the vehicle and a target position (40) to which the vehicle moves; and a control section (36) that causes a display unit (8) to display a synthesized image (G3) including a vehicle image (G1) showing the vehicle, and a periphery image (G2) representing the periphery of the vehicle based on the captured image. In accordance with at least one of a distance between the current position of the vehicle and the target position, or a period until the vehicle reaches the target position, the control section causes the synthesized image to be displayed by being enlarged more than when the target position is acquired.

## Description

### TECHNICAL FIELD

Embodiments of this disclosure relate to an image processing device.

### BACKGROUND DISCUSSION

There is a technique of generating a bird's-eye view image based on a captured image obtained by imaging a periphery of a vehicle with an image capturing unit provided in the vehicle and displaying a periphery situation of the vehicle on a display device. Further, when displaying such a bird's-eye view image, a technique has been proposed in which a display region is divided into a plurality of regions and a region designated by a user is enlarged and displayed. An example of the related art includes Japanese Patent No. 5825323.

In the case of the related art, when the user wants to check the details of the periphery situation by the display image, for example, when traveling at a low speed for parking or the like, there is a problem in that it is necessary to stop and designate a region to be enlarged each time, an operation is complicated, and a driving operation may be interrupted due to a display switching operation, which may annoy a driver.

A need thus exists for an image processing device that can display a periphery image that allows the user to easily check the surrounding situation of the vehicle and that can easily reduce the complexity of the operation.

### SUMMARY

An image processing device according to an embodiment includes, for example, an image acquisition section that acquires a captured image captured by an image capturing unit that images a periphery of a vehicle, a position acquisition section that acquires a current position of the vehicle and a target position to which the vehicle moves, and a control section that causes a display unit to display a synthesized image including a vehicle image showing the vehicle, and a periphery image representing the periphery of the vehicle based on the captured image, in which in accordance with at least one of a distance between the current position of the vehicle and the target position, or a period until the vehicle reaches the target position, the control section causes the synthesized image to be displayed by being enlarged more than when the target position is acquired. According to this configuration, for example, when the vehicle is moved to the target position, the synthesized image including the vehicle image corresponding to the own vehicle is automatically enlarged according to the relationship between the vehicle (own vehicle) and the target position. As a result, there is no need for an operation for changing the display when a driver is desired to check the surroundings, and it is possible to realize an image processing device that can reduce the complexity of the operation and can display an image in which the surrounding situation can be easily recognized.

The control section of the image processing device according to the embodiment may enlarge the synthesized image with a position shifted from a center of the vehicle image displayed in the synthesized image as an enlargement base point, for example. According to this configuration, for example, it becomes easy to include the region of interest that is present at a position distant from the vehicle in the enlarged and displayed synthesized image, and the visibility of the region of interest (region for which the situation is to be ascertained) can be improved.

In accordance with a relative angle between the vehicle and the target position, the control section of the image processing device according to the embodiment may enlarge the synthesized image with a position shifted from the center of the vehicle image toward a direction in which the target position is present as the enlargement base point, for example. According to this configuration, for example, since the direction (azimuth) in which the target position is present is displayed larger when the synthesized image is enlarged, it is possible to provide a display that makes it easier to ascertain the situation in the future direction, and it is possible to realize the image processing device that can easily reduce the complexity of the operation.

In accordance with an advancing azimuth of the vehicle, the control section of the image processing device according to the embodiment may enlarge the synthesized image with a position shifted from the center of the vehicle image toward the advancing azimuth of the vehicle as the enlargement base point, for example. According to this configuration, for example, since the direction (azimuth) in which the target position is present is displayed larger based on a behavior of the vehicle (for example, a behavior of the vehicle determined by steering angle, tire angle, or the like) when the synthesized image is enlarged, the operation of the driver corresponds to the display change of the synthesized image, it is possible to provide a display that makes it further easier to ascertain the situation in the future direction, and it is possible to realize the image processing device that can easily reduce the complexity of the operation.

In accordance with a relative angle between the vehicle and the target position, the control section of the image processing device according to the embodiment may cause a rotatable direction indicator that indicates a direction in which the target position is present with respect to the vehicle image to be superimposed and displayed on a position related to the vehicle image, for example. According to this configuration, for example, it is possible to realize an image display that makes it easy for the driver to recognize the direction of the target position to which the vehicle should head, to feel a sense of security during driving, and to feel the reduction of the burden during driving.

In accordance with an advancing azimuth of the vehicle, the control section of the image processing device according to the embodiment may cause a rotatable direction indicator that indicates a direction in which the target position is present with respect to the vehicle image to be superimposed and displayed on a position related to the vehicle image, for example. According to this configuration, for example, it is possible to provide a display of a direction indicator that indicates the direction in which the target position is present, based on the behavior of the vehicle (for example, the direction in which the vehicle is directed, which is determined by the steering angle, the tire angle, or the like). As a result, it is possible to realize an image display that makes it easy for the driver to recognize the direction of the target position to which the vehicle should head, to easily ascertain the behavior of the vehicle with respect to the target position, to feel a sense of security during driving, and to feel the reduction of the burden during driving.

As the vehicle approaches the target position, the control section of the image processing device according to the embodiment may change a display transmittance of the direction indicator such that the display transmittance becomes higher, for example. According to this configuration, for example, when the vehicle approaches the target position and the degree of recognition of the target position increases, the transparency of the direction indicator increases, and the display content is simplified. As a result, a more easily recognizable synthesized image can be displayed.

When the distance to the target position with respect to the vehicle image is equal to or less than a predetermined value, the control section of the image processing device according to the embodiment may cause a stop indicator that implies stopping the vehicle at the target position to be displayed, for example. According to this configuration, for example, the position where the vehicle should be stopped can be displayed more clearly.

As the vehicle approaches the target position, the control section of the image processing device according to the embodiment may change a display transmittance of the stop indicator such that the display transmittance becomes lower than when displaying is started, for example. According to this configuration, for example, the stop indicator is displayed with a highlighted display as the vehicle approaches the target position. As a result, it is possible to provide a display that allows the driver to easily and clearly recognize the approach of the target position at which the vehicle should stop.

The control section of the image processing device according to the embodiment may perform a switching of an indicator display from the direction indicator to the stop indicator by changing a display transmittance of the direction indicator to be higher and changing the display transmittance of the stop indicator to be lower as the vehicle approaches the target position, for example. According to this configuration, for example, it is possible to realize an image display that makes it easy for the driver to recognize the approach to the target position, to feel a sense of security during driving, and to feel the reduction of the burden during driving.

When displaying the stop indicator, the control section of the image processing device according to the embodiment may change a type of the stop indicator between when the target position is a final target position and when the target position is an intermediate target position set in the course of moving toward the final target position, for example. According to this configuration, for example, it is possible to provide a display that allows the driver to more clearly recognize the current situation, that is, whether the current stop position is the intermediate target position or the final target position, and whether or not the movement (guidance assistance) of the vehicle is completed.

In the image processing device according to the embodiment, the synthesized image may be a bird's-eye view image viewing the vehicle image and the periphery image from above, for example. According to this configuration, for example, it is possible to realize an image display that makes it easier for the driver to ascertain the positional relationship between the vehicle image (own vehicle) and the target position, to feel a sense of security during driving, and to feel the reduction of the burden during driving.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exemplary and schematic perspective view illustrating a state in which a part of a vehicle interior of a vehicle equipped with an image processing device according to an embodiment is seen through;
Fig. 2 is an exemplary and schematic plan view of the vehicle equipped with the image processing device according to the embodiment;
Fig. 3 is an exemplary and schematic block diagram illustrating a functional configuration of a control system of the vehicle including the image processing device according to the present embodiment;
Fig. 4 is a block diagram exemplarily and schematically illustrating a configuration of the image processing device (image processing section) according to the embodiment;
Fig. 5 is an exemplary and schematic view of a display image by the image processing device according to the embodiment;
Fig. 6 is an exemplary and schematic view of a state in which enlargement display processing and move display processing are executed on a synthesized image on a display screen of the image processing device according to the embodiment;
Fig. 7 is another exemplary and schematic view of a state in which the enlargement display processing and the move display processing are executed on a synthesized image on the display screen of the image processing device according to the embodiment;
Fig. 8 is an exemplary and schematic view for explaining a direction indicator on the display screen of the image processing device according to the embodiment;
Fig. 9 is an exemplary and schematic view illustrating a display transition of a direction indicator and a stop indicator on the display screen of the image processing device according to the embodiment;
Fig. 10 is an exemplary and schematic view illustrating that different stop indicators are displayed according to the type (meaning) of a target position on the display screen of the image processing device according to the embodiment;
Fig. 11 is a flowchart exemplarily illustrating a flow of image processing performed by the image processing device according to the embodiment; and
Fig. 12 is an exemplary and schematic view illustrating an example of the display transition by the image processing device according to the embodiment.

### DETAILED DESCRIPTION

Hereinafter, an exemplary embodiment of this disclosure will be disclosed. A configuration of the embodiment illustrated below and the actions, results, and effects provided by the configuration are examples. This disclosure can be realized by a configuration other than those disclosed in the following embodiment, and at least one of various effects and derivative effects based on the basic configuration can be obtained.

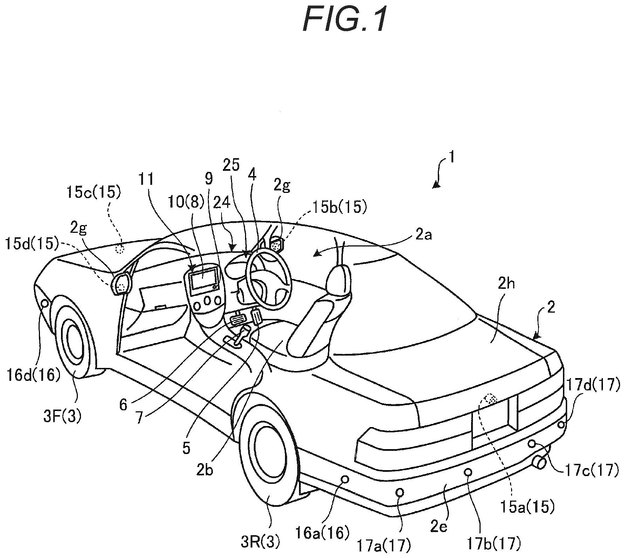

Fig. 1 is an exemplary and schematic perspective view illustrating a state in which a part of a vehicle interior 2a of a vehicle 1 equipped with an image processing device according to an embodiment is seen through. The vehicle equipped with the image processing device according to the present embodiment may be a car that uses an internal combustion engine (engine) as a drive source (internal combustion engine car), may be a car that uses an electric motor (motor) as a drive source (electric car, fuel cell car, or the like), or may be a car (hybrid car) that uses both of the internal combustion engine and the electric motor as drive sources. Further, the vehicle can be equipped with various transmissions and various devices (such as systems and parts) necessary for driving the internal combustion engine and the electric motor. Further, the method, the number, the layout, or the like of the devices related to driving wheels in the vehicle can be set variously.

As illustrated in Fig. 1, a vehicle body 2 of the vehicle 1 constitutes the vehicle interior 2a in which an occupant (not illustrated) is seated. Inside the vehicle interior 2a, a steering unit 4, an acceleration operation unit 5, a braking operation unit 6, a gear shift operation unit 7, and the like are provided in a state of facing a seat 2b of a driver as an occupant. The steering unit 4 is, for example, a steering wheel projecting from a dashboard 24. The acceleration operation unit 5 is, for example, an accelerator pedal positioned under the driver's foot. The braking operation unit 6 is, for example, a brake pedal positioned under the driver's foot. The gear shift operation unit 7 is, for example, a shift lever projecting from a center console.

Further, inside the vehicle interior 2a, a display device 8 (display unit) or a voice output device 9 as a voice output unit are provided. The display device 8 is, for example, a liquid crystal display (LCD), an organic electroluminescent display (OELD), or the like. The voice output device 9 is, for example, a speaker. Further, the display device 8 is covered with a transparent operation input unit 10 such as a touch panel. The occupant (user) can visually recognize an image displayed on a display screen of the display device 8 through the operation input unit 10. Further, the occupant can perform an operation input by operating the operation input unit 10 by touching, pushing, or moving the operation input unit 10 with a finger or the like at a position corresponding to an image displayed on the display screen of the display device 8. The display device 8, the voice output device 9, the operation input unit 10, or the like are provided on, for example, a monitor device 11 positioned at a center portion of the dashboard 24 in the vehicle width direction, that is, the left-right direction. The monitor device 11 can have an operation input unit (not illustrated) such as a switch, a dial, a joystick, or a push button. Further, a voice output device (not illustrated) can be provided at another position inside the vehicle interior 2a different from the monitor device 11, and voice can be output from the voice output device 9 of the monitor device 11 and another voice output device. Note that the monitor device 11 can also be used as a navigation system or an audio system, for example.

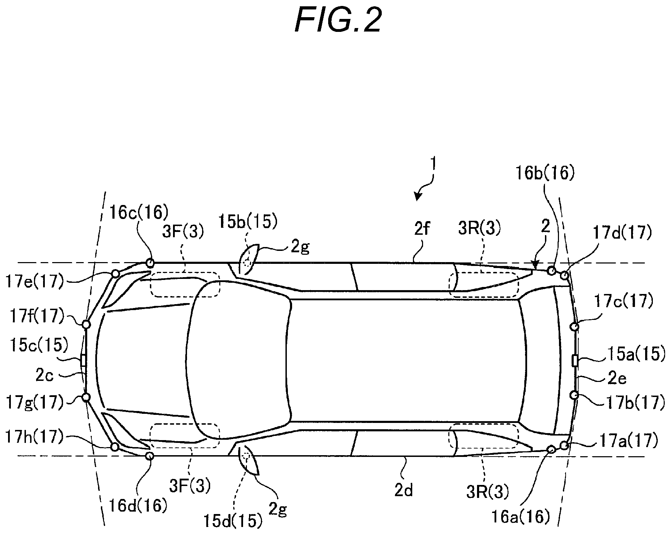

Fig. 2 is an exemplary and schematic plan view of the vehicle 1 equipped with the image processing device according to the present embodiment. As illustrated in Figs. 1 and 2, the vehicle 1 is a four-wheeled car or the like, and has two left and right front vehicle wheels 3F and two left and right rear vehicle wheels 3R. All or a part of the four wheels 3 can be steered by the steering unit 4.

The vehicle body 2 is provided with, for example, four image capturing units 15a to 15d as a plurality of image capturing units 15. The image capturing unit 15 is, for example, a digital camera including an image capturing element such as a charge coupled device (CCD) or a CMOS image sensor (CIS). The image capturing unit 15 can output moving image data at a predetermined frame rate. Each of the image capturing units 15 has a wide angle lens or a fisheye lens, and can image a range of 140° to 220° in the horizontal direction, for example. Further, the optical axis of the image capturing unit 15 is set obliquely downward. Therefore, the image capturing unit 15 sequentially images an external environment of a periphery of the vehicle body 2 including a road surface on which the vehicle 1 can move and a region where the vehicle 1 can be parked, and outputs the captured image data.

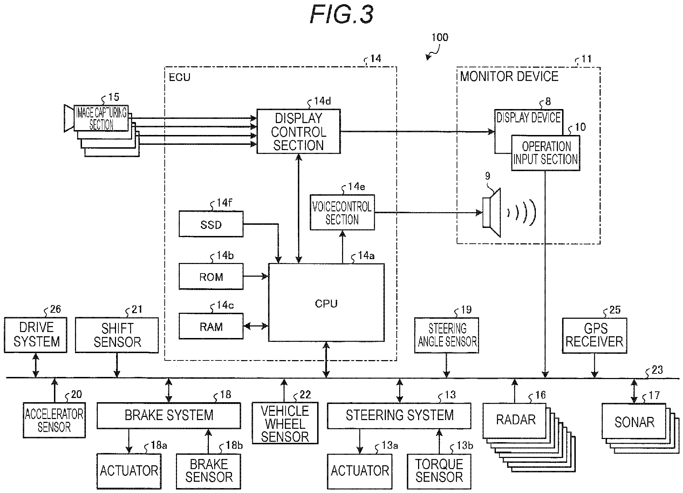

The image capturing unit 15a is positioned, for example, at a rear end portion 2e of the vehicle body 2, is provided on the wall portion below a trunk door 2h, and images the situation in the rear region of the vehicle 1. The image capturing unit 15b is positioned, for example, at a right end portion 2f of the vehicle body 2 and is provided on a right side door mirror 2g, and images the situation of regions including the right front side, right side, and right rear side of the vehicle 1. The image capturing unit 15c is positioned, for example, at an end portion 2c on the front side of the vehicle body 2, that is, on the front side in the vehicle front-rear direction, is provided on the front bumper or the like, and images the situation of a front region of the vehicle 1. The image capturing unit 15d is positioned, for example, at an end portion 2d on the left side of the vehicle body 2, that is, on the left side in the vehicle width direction, is provided on the door mirror 2g as a left side projecting portion, and images the situation of regions including the left front side, the left side, and the left rear side of the vehicle 1. By executing arithmetic processing or image processing based on the captured image data obtained by the plurality of image capturing units 15, the ECU 14 (see Fig. 3) that constitutes the image processing device can generate an image with a wider viewing angle and generate a virtual bird's-eye view image of the vehicle 1 viewed from the upper side (directly above or obliquely above).

Further, the vehicle 1 has a plurality of radars 16 as a distance measuring portion capable of measuring a distance to an object that is present outside the vehicle 1. The radar 16 is, for example, a millimeter wave radar or the like, and can measure a distance to an object that is present in the advancing azimuth of the vehicle 1 (direction in which the vehicle 1 faces). In the present embodiment, the vehicle 1 has a plurality of radars 16a to 16d. The radar 16a is provided, for example, at a left end portion of the rear bumper of the vehicle 1 and can measure a distance to an object that is present on the left rear side of the vehicle 1. Further, the radar 16b is provided at a right end portion of the rear bumper of the vehicle 1 and can measure a distance to an object that is present on the right rear side of the vehicle 1. The radar 16c is provided at a right end portion of a front bumper of the vehicle 1 and can measure a distance to an object that is present on the right front side of the vehicle 1. Further, the radar 16d is provided at a left end portion of the front bumper of the vehicle 1 and can measure a distance to an object that is present on the left front side of the vehicle 1.

Further, the vehicle 1 has a sonar 17 capable of measuring a distance to an external object that is present at a relatively short distance from the vehicle 1 using an ultrasonic wave. In the present embodiment, the vehicle 1 has a plurality of sonars 17a to 17h. The sonars 17a to 17d are provided on the rear bumper of the vehicle 1 and can measure a distance to an object that is present behind the vehicle. The sonars 17e to 17h are provided on the front bumper of the vehicle 1 and can measure a distance to an object that is present in front of the vehicle 1.

Fig. 3 is an exemplary and schematic block diagram illustrating a functional configuration of a control system 100 of the vehicle 1 including the image processing device according to the present embodiment. As illustrated in Fig. 3, in the control system 100, the ECU 14, the monitor device 11, a steering system 13, the radar 16, the sonar 17, and the like, as well as a brake system 18, a steering angle sensor 19, an accelerator sensor 20, a shift sensor 21, a vehicle wheel sensor 22, a global positioning system (GPS) receiver 25, a drive system 26, and the like are electrically coupled via an in-vehicle network 23 as an electric telecommunication line. The in-vehicle network 23 is configured as, for example, a controller area network (CAN). The ECU 14 can control the steering system 13, the brake system 18, the drive system 26, and the like by transmitting a control signal through the in-vehicle network 23. Further, the ECU 14 can receive detection results of a torque sensor 13b, a brake sensor 18b, the steering angle sensor 19, the radar 16, the sonar 17, the accelerator sensor 20, the shift sensor 21, the vehicle wheel sensor 22, the GPS receiver 25, and the like via the in-vehicle network 23, or can receive operation signals of switches such as the operation input unit 10, and the like.

The steering system 13 is an electric power steering system, a steer by wire (SBW) system, or the like. The steering system 13 has an actuator 13a and the torque sensor 13b. The steering system 13 is electrically controlled by the ECU 14 or the like, and steers the wheels 3 by operating the actuator 13a to apply torque to the steering unit 4 to supplement the steering force. The torque sensor 13b detects the torque applied to the steering unit 4 by the driver and transmits the detection result to the ECU 14.

The brake system 18 includes an anti-lock brake system (ABS) that controls the brake lock of the vehicle 1, an antiskid brake device (ESC: Electronic Stability Control) that suppresses the skid of the vehicle 1 during cornering, an electric brake system that enhances the braking force to assist the brake, and a brake by wire (BBW). The brake system 18 has an actuator 18a and the brake sensor 18b. The brake system 18 is electrically controlled by the ECU 14 or the like, and applies a braking force to the wheels 3 via the actuator 18a. The brake system 18 detects a brake lock, an idling of the wheel 3, and a sign of skid from a rotational difference between the left and right wheels 3 and performs control for suppressing the brake lock, the idling of the wheels 3, and the skidding. The brake sensor 18b is a displacement sensor that detects a position of a brake pedal that is a movable portion of the braking operation unit 6, and transmits the detection result of the position of the brake pedal to the ECU 14.

The steering angle sensor 19 is a sensor that detects a steering amount (steering angle) of the steering unit 4 such as a steering wheel. The steering angle sensor 19 is constituted by a Hall element or the like, detects the rotation angle of the rotating portion of the steering unit 4 as the steering amount, and transmits the detection result to the ECU 14. The ECU 14 (CPU 14a) may calculate the tire angle based on the acquired steering angle. In this case, for example, it may be calculated using a conversion map of the steering angle and the tire angle prepared for each vehicle type in advance, or may be calculated based on a predetermined arithmetic expression. In another embodiment, the steering mechanism may be provided with a tire angle sensor to directly acquire the tire angle. The steering angle or the tire angle can be used as information indicating the advancing azimuth of the vehicle 1 for calculating a movement amount of a vehicle image, displaying a direction indicator, or the like which will be described later.

The accelerator sensor 20 is a displacement sensor that detects a position of an accelerator pedal that is a movable portion of the acceleration operation unit 5, and transmits the detection result to the ECU 14.

The shift sensor 21 is a sensor that detects a position of the movable portion (bar, arm, button, or the like) of the gear shift operation unit 7, and transmits the detection result to the ECU 14. The vehicle wheel sensor 22 has a Hall element or the like, is a sensor that detects the rotation amount of the wheel 3 and the rotation speed of the wheel 3 per unit time, and transmits the detection result to the ECU 14. The GPS receiver 25 acquires a current position of the vehicle 1 based on a radio wave received from the artificial satellite.

The drive system 26 is an internal combustion engine (engine) system or a motor system as a drive source. The drive system 26 controls the fuel injection amount or the intake amount of the engine, or controls an output value of the motor according to the required operation amount of the driver (user) detected by the accelerator sensor 20 (for example, the pedaling amount of the accelerator pedal). Further, regardless of the user's operation, the output value of the engine or the motor can be controlled in cooperation with the control of the steering system 13 or the brake system 18 in accordance with the traveling state of the vehicle 1. For example, it is possible to perform traveling assistance such as normal traveling assistance or parking assistance.

The configurations, dispositions, electrical coupling forms, or the like of the various sensors or actuators described above are merely examples, and can be set (changed) in various ways.

The ECU 14 is constituted by a computer or the like, and governs overall control of the vehicle 1 by the cooperation of hardware and software. Specifically, the ECU 14 includes a central processing unit (CPU) 14a, a read only memory (ROM) 14b, a random access memory (RAM) 14c, a display control unit 14d, a voice control unit 14e, and a solid state drive (SSD) 14f. The CPU 14a, the ROM 14b, and the RAM 14c may be provided in the same circuit substrate.

The CPU 14a can read a program installed and stored in a non-volatile storage device such as the ROM 14b, and execute arithmetic processing according to the program. The CPU 14a can execute, for example, arithmetic calculation and control of image processing related to an image displayed on the display device 8. Further, the CPU 14a can execute distortion correction processing for correcting distortion by performing the arithmetic processing or the image processing on the captured image data (data of curved image) of the wide angle image obtained by the image capturing unit 15. The CPU 14a can also generate a bird's-eye view image (periphery image) that displays a vehicle image (own vehicle icon) illustrating the vehicle 1 at a center position, for example, based on the captured image data imaged by the image capturing unit 15, and displays the bird's-eye view image on the display device 8. Further, the CPU 14a can change a position of the virtual viewpoint when generating the bird's-eye view image, and can generate the bird's-eye view image that looks at the vehicle image from directly above or the bird's-eye view image that looks at the vehicle image from an oblique direction.

When performing the traveling assistance such as parking assistance, the CPU 14a provides, for example, a display that makes it easy for the driver to recognize the situation of parking assistance or the surrounding situation of the vehicle 1 during the parking assistance, thereby it is easy to increase the driver's sense of security when traveling assistance, and it is possible to realize an image display that makes it easy for the driver to feel that the burden during the driving is reduced. For example, the display content which is displayed on the display device 8 is automatically changed according to the positional relationship between a target position, such as a parking target position or a stop position for turning back required when moving to the parking target position, and the vehicle 1 (for example, according to at least one of the distance between the current position of the vehicle 1 and the target position, or the period until the vehicle 1 reaches the target position). As will be described later, the CPU 14a executes the enlargement display processing of a synthesized image that includes a vehicle image, executes a movement processing of the display position, indicates a direction indicator indicating the direction of the target position, or indicates a stop indicator that implies a stop when the vehicle 1 reaches the target position.

The ROM 14b stores various programs and parameters necessary for executing the programs. The RAM 14c temporarily stores various data used in the arithmetic calculation by the CPU 14a. The display control unit 14d mainly performs the image processing on the image data which is acquired from the image capturing unit 15 and output to the CPU 14a, in the arithmetic processing in the ECU 14, and executes conversion of the image data acquired from the CPU 14a into image data for display which is displayed on the display device 8, and the like. The voice control unit 14e mainly executes processing of a voice which is acquired from the CPU 14a and is output to the voice output device 9 in the arithmetic processing in the ECU 14. The SSD 14f is a rewritable non-volatile storage unit, and continues to store the data acquired from the CPU 14a even when the power of the ECU 14 is turned off. The CPU 14a, the ROM 14b, the RAM 14c, and the like can be integrated into the same package. Further, the ECU 14 may be configured to use another logic arithmetic processor such as a digital signal processor (DSP), logic circuit, or the like instead of the CPU 14a. Further, a hard disk drive (HDD) may be provided instead of the SSD 14f, or the SSD 14f and the HDD may be provided separately from the ECU 14.

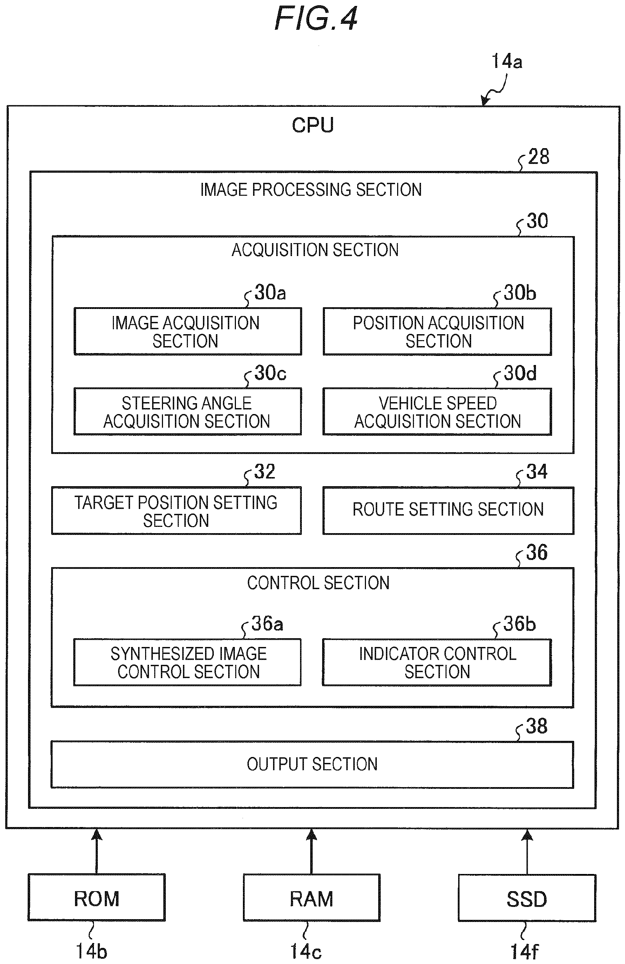

Fig. 4 is a block diagram exemplarily and schematically illustrating the configuration when the image processing device (image processing section 28) according to the embodiment is realized by the CPU 14a. By executing an image processing program which is read from the ROM 14b, as illustrated in Fig. 4, the CPU 14a realizes the image processing section 28 including modules such as an acquisition section 30, a target position setting section 32, a route setting section 34, a control section 36, and an output section 38. Further, the acquisition section 30 also includes detailed modules such as an image acquisition section 30a, a position acquisition section 30b, a steering angle acquisition section 30c, and a vehicle speed acquisition section 30d. The control section 36 includes detailed modules such as a synthesized image control section 36a and an indicator control section 36b. Note that a part or all of the acquisition section 30, the target position setting section 32, the route setting section 34, the control section 36, and the output section 38 may be configured with hardware such as a circuit. Further, the target position setting section 32 and the route setting section 34 may acquire a set value or a calculated value by another ECU or CPU that executes the route guidance control. Although omitted in Fig. 4, the CPU 14a can also realize various modules required for traveling of the vehicle 1. Further, in Fig. 3, the CPU 14a that mainly executes image processing is illustrated, but a CPU for realizing various modules required for traveling of the vehicle 1 may be provided, or an ECU different from the ECU 14 may be provided.

The acquisition section 30 acquires information necessary for realizing various processes in the image processing section 28. The target position setting section 32 detects a target position such as a region available for parking that may be present around the vehicle 1 by using a well-known technique. When a target position (for example, a parking target position) is set by the target position setting section 32, the route setting section 34 uses a well-known route search technique to set the most rational optimal route for moving from the current position of the vehicle 1 to a target position (for example, a parking target position). The control section 36 mainly controls the display image on the display device 8 when traveling assistance (including parking assistance and the like) is performed. The output section 38 provides the display control result of the control section 36 to the display control unit 14d and causes the display device 8 to display the display control result. The output section 38 may provide the information such as the target position set by the target position setting section 32 and a movement route set by the route setting section 34 to other ECUs or CPUs that execute the traveling assistance.

Details of the acquisition section 30, the target position setting section 32, the route setting section 34, and the control section 36 will be described below. In the following description, a display by image processing when the traveling assistance (parking assistance) for moving the vehicle 1 to the parking position is executed, will be described as an example.

The image acquisition section 30a included in the acquisition section 30 acquires, for example, a captured image obtained by imaging the periphery of the vehicle 1 by the image capturing unit 15 and provides the captured image to the control section 36. The position acquisition section 30b acquires a current position of the vehicle 1 and a target position to which the vehicle 1 moves, and provides the target position to the control section 36. The current position of the vehicle 1 may be acquired, for example, based on a radio wave received by the GPS receiver 25 from an artificial satellite, or may be calculated on the basis of a position of the gate of the parking lot or the position designated by the driver (for example, a position where the traveling assistance (parking assistance) start is instructed) as a reference and based on the traveling distance from the position or the change in the steering angle. The position acquisition section 30b also acquires a parking target position set by the target position setting section 32 as a target position. Further, when the movement route set by the route setting section 34 based on the parking target position set by the target position setting section 32 includes a stop position for turning back, the position acquisition section 30b acquires the stop position as a target position.

The steering angle acquisition section 30c acquires the output result of the steering angle sensor 19 and provides the control section 36 with information indicating the current advancing azimuth of the vehicle 1. As will be described later, when the steering angle information is received from the steering angle acquisition section 30c as the information indicating the current advancing azimuth of the vehicle 1, the control section 36 may use the steering angle as it is for control, or may calculate the tire angle based on the acquired steering angle and use the tire angle as information indicating the current advancing azimuth of the vehicle 1. In this case, as described above, the control section 36 may calculate, for example, the tire angle corresponding to the steering angle using a conversion map of the steering angle and the tire angle which are prepared for each vehicle type in advance, or may calculate the tire angle corresponding to the steering angle using a predetermined arithmetic expression. In another embodiment, the steering mechanism may be provided with a tire angle sensor, and the control section 36 may directly acquire the tire angle.

The vehicle speed acquisition section 30d calculates the vehicle speed, the movement amount, or the like of the vehicle 1 based on the detection value of the vehicle wheel sensor 22. When calculating the vehicle speed of the vehicle 1 based on the detection value of the vehicle wheel sensor 22 of each wheel 3, the vehicle speed acquisition section 30d can determine the vehicle speed of the vehicle 1 based on the speed of the wheel 3 having the smallest detection value among the four wheels.

The target position setting section 32 searches for a parking position candidate while the vehicle 1 is traveling at a low speed in a parking lot or the like for parking when a parking assistance mode is turned on, for example. For example, based on the recognition result such as a parking frame line, a white line, a marked line that can be included in the captured image data indicating the periphery situation of the vehicle 1 acquired by the image acquisition section 30a, or based on the presence information of objects (obstacles, other vehicles, or the like) acquired by the radar 16, the sonar 17, or the like, for example, the target position setting section 32 detects a space (region available for parking) that can accommodate the vehicle 1. When a plurality of regions available for parking (parking position candidates) are detected, the target position setting section 32 may automatically select the parking position candidate with the best condition and set the parking position candidate as a target position, or may sequentially present the parking position candidates with good conditions to a driver and allow the driver to select the candidate via the operation input unit 10, for example. In this case, the priority of the parking position candidate can be determined by, for example, scoring the movement distance from the current position to the parking position candidate, the number of turn-back operations when moving the vehicle 1 from the current position to the parking position candidate, the size of the extra space around the vehicle 1 when parking is completed at the parking position candidate, or the like and comparing the total values. Further, when there is only one region available for parking, the parking position may be displayed and automatically set as the target position, or the driver may be asked to confirm whether the vehicle can be parked at this position and then the target position may be set. The target position setting section 32 may transmit the information about the current position of the vehicle 1, surrounding information, or the like to an external system, acquire a parking position candidate calculated by the external system, and set the target position.

The route setting section 34 refers to the captured image data acquired by the image acquisition section 30a, the detection information of the object acquired by the radar 16 and the sonar 17, and the like and calculates a route that allows the vehicle 1 to move in a state where a sufficient safety interval is secured without contacting obstacles or other vehicles. The route setting section 34 may transmit the information about the current position of the vehicle 1, the information about the parking position, the surrounding information, and the like to the external system, acquire a route calculated by the external system, and set the route as the optimal route.

The synthesized image control section 36a included in the control section 36 uses a well-known technique to generate a bird's-eye view image or a three-dimensional image based on the captured image data imaged by each image capturing unit 15 acquired by the image acquisition section 30a, and acquires image data for displaying the vehicle image illustrating the vehicle 1 from the storage unit such as the ROM 14b. Further, a synthesized image including a periphery image displaying the periphery of the vehicle 1 and a vehicle image illustrating the vehicle 1 is generated and displayed on the display device 8. The synthesized image control section 36a changes an enlargement ratio when displaying the synthesized image according to at least one of a distance between the current position of the vehicle 1 and the target position, and a period (for example, time) until the vehicle 1 reaches the target position. For example, the synthesized image control section 36a uses the position shifted from the center of the vehicle image and displayed in the synthesized image as the enlargement base point and displays the synthesized image by enlarging the synthesized image more than when the target position is acquired. In that case, the display position of the vehicle image on the display device 8 is displayed so as to move in the direction opposite to the direction in which the target position is present.

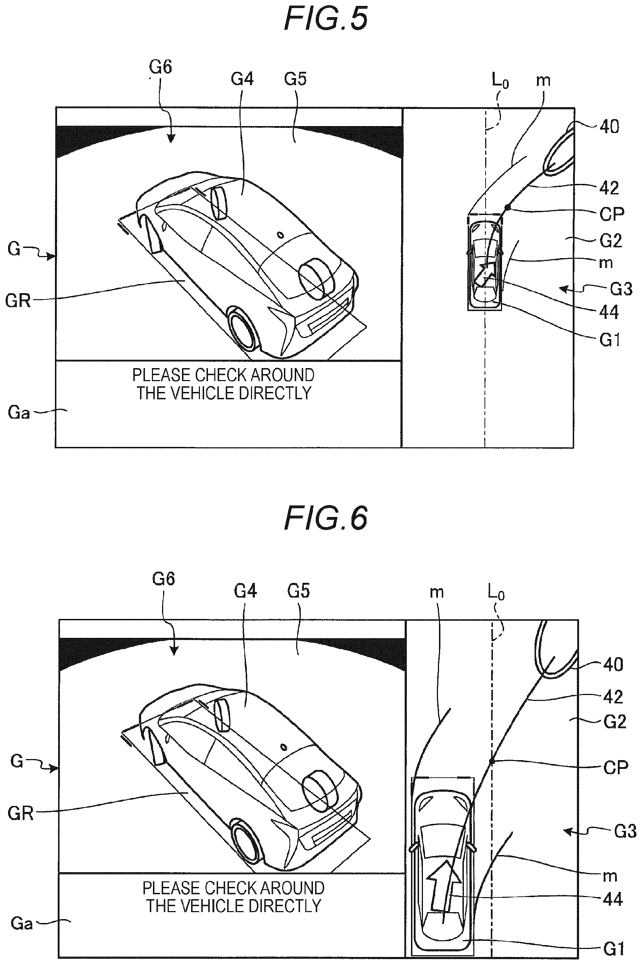

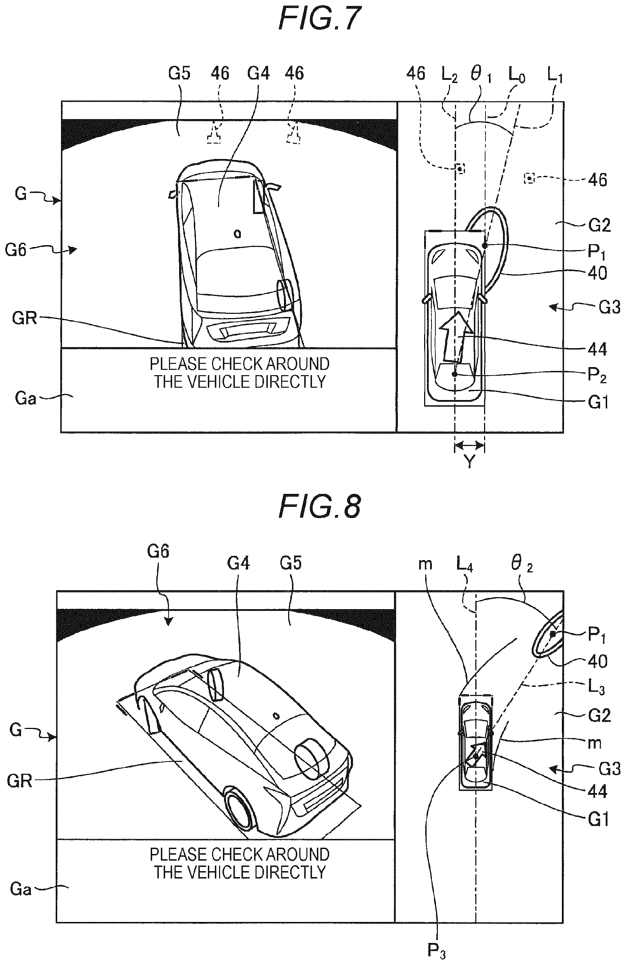

Figs. 5 to 7 are exemplary and schematic views of the display image G which is displayed and controlled by the control section 36. As described above, the synthesized image control section 36a provides an enlargement display of the synthesized image and performs the movement of the display position of the vehicle image. In Fig. 5, the initial display state, where the synthesized image is in a non-enlarged state and the vehicle image is in a non-moving state, is illustrated. On the other hand, in Figs. 6 and 7, the processing executing state, where the synthesized image is in an enlarged state and the vehicle image is in a moving state, is illustrated.

As illustrated in Figs. 5 to 7, the synthesized image control section 36a generates a first synthesized image G3 including the vehicle image G1 and the periphery image G2 as a first bird's-eye view image of the vehicle 1 viewed from directly above (for example, a virtual viewpoint is set directly above the vehicle 1). Further, the synthesized image control section 36a generates a second synthesized image G6 including the three-dimensional vehicle image G4 and the three-dimensional periphery image G5 as a three-dimensional second bird's-eye view image of the vehicle 1 viewed from the obliquely upper side. Fig. 5 illustrates a case where the target position is positioned on the right front side of the vehicle 1, for example, and an example in which the virtual viewpoint is set to the rear obliquely upper left side of the vehicle 1 so that the target position can be seen across the vehicle 1. Therefore, when the target position is the obliquely left front side of the vehicle 1, the virtual viewpoint can be the bird's-eye view image set to the rear obliquely upper right side of the vehicle 1.

In the case of Figs. 5 to 7, although the example in which the first synthesized image G3 is disposed on the right side of the display image G and the second synthesized image G6 is disposed on the left side of the display image G is illustrated, the disposition layout can be appropriately changed. Further, in the case of Figs. 5 to 7, although the example in which the display region of the second synthesized image G6 is wider than the display region of the first synthesized image G3 is illustrated, the display region of the first synthesized image G3 may be wider than the display region of the second synthesized image G6. Further, only the first synthesized image G3 or only the second synthesized image G6 may be displayed. Furthermore, instead of the second synthesized image G6, a real image illustrating the advancing direction or the lateral direction of the vehicle 1 may be displayed, or an image illustrating other information may be displayed.

By displaying the first synthesized image G3 including the vehicle image G1 which is a bird's-eye view image of the vehicle 1 viewed from directly above, for example, it is possible to make a display in which the positional relationship between the vehicle 1 and the periphery objects thereof can be ascertained accurately. The vehicle image G1 may be a bitmap format image or an image illustrating a shape of the vehicle 1 composed of a plurality of polygons. The vehicle image G1 composed of a plurality of polygons is a three-dimensional shape of the vehicle 1 represented by a plurality of polygons (for example, a triangular polygon). Further, the periphery image G2 is an image using a well-known bird's-eye view image generation technique, and is an image representing the periphery (surrounding) of the vehicle 1, which is generated based on the captured image obtained by capturing the vehicle 1 surrounding by the image capturing unit 15. The periphery image G2 is a bird's-eye view image of the periphery (surrounding) of the vehicle 1 viewed from directly above. The periphery image G2 is a bird's-eye view image of the periphery of the vehicle 1 around the center of, for example, the rear vehicle wheel shaft of the vehicle image G1.

Further, by displaying a three-dimensional periphery image G5 of the vehicle 1 viewed from the rear obliquely upper left side, it is possible to make a display that makes it easy to ascertain the positional relationship between the vehicle 1 and the periphery objects thereof in a state close to the real world (having reality). Similar to the vehicle image G1, the three-dimensional vehicle image G4 is an image composed of a plurality of polygons and illustrating the three-dimensional shape of the vehicle 1. The three-dimensional periphery image G5 is an image using a well-known bird's-eye view image generation technique, and is an image generated by attaching a plurality of captured images obtained by imaging the periphery of the vehicle 1 by the image capturing unit 15 to a bowl shaped or cylindrical shaped three-dimensional surface. Further, the three-dimensional periphery image G5 is displayed in, for example, a semi-transparent display mode so that a display is provided such that an object or the like that is present in the three-dimensional periphery image G5 that is blocked by the three-dimensional vehicle image G4 is easily visible, and the vehicle position information GR that enables the position of the three-dimensional vehicle image G4 to be identified with respect to the road surface is displayed. The vehicle position information GR, for example, can be information for displaying the position where the three-dimensional vehicle image G4 is present on the road surface of the three-dimensional periphery image G5 in grayscale, and can be information in which the position where the three-dimensional vehicle image G4 is present, is displayed with a surrounding line (for example, a broken line). The vehicle position information GR may be displayed with respect to the vehicle image G1 in the periphery image G2. Further, an information display region Ga may be provided in a part of the second synthesized image G6, a message such as "Please check around the vehicle directly." may be displayed, for example, when the second synthesized image G6 or the first synthesized image G3 is displayed, and the driver or the like may be alerted when an image showing the surrounding situation is displayed.

Fig. 5 is a display example of the first synthesized image G3 in the initial state in which the target position 40 and the movement route 42 are set by the target position setting section 32 and the route setting section 34. In the case of Fig. 5, the final parking position (final target position) is determined by the target position setting section 32, and it indicates a state where the target position 40 is set as a position to stop in order to perform a turn-back to a movement route 42 in a state where the movement route 42 for moving the vehicle 1 from the current position of the vehicle 1 to the final target position is determined. The target position 40 is displayed by, for example, an indicator (mark) of substantially elliptical form, but the form of the indicator can be appropriately changed as long as the indicator can indicate the stop position.

When the target position 40 (stop target position for turning back) is determined, the vehicle image G1 is displayed at a position of a center line L₀ that indicates the substantially center in the vehicle width direction in the first synthesized image G3 (generally the center position of the first synthesized image G3). When the vehicle 1 is far from the target position 40, it is easier for the driver to feel a sense of security when the driver can check a wide range of the periphery situation of the vehicle 1. Therefore, a display enlargement ratio of the first synthesized image G3 is defined as, for example, "1" as a predetermined reference value, and it is desirable to display both the vehicle image G1 displayed at the substantially center position of the first synthesized image G3 and the set target position 40 so as to fit in the first synthesized image G3. When the target position 40, which is a stop position for turning back, is far from the current position of the vehicle 1, the display enlargement ratio of the first synthesized image G3 may be defined as "1" or less. Further, since the target position 40 gradually enters the display region of the first synthesized image G3 as the vehicle image G1 (vehicle 1) approaches, the entire target position 40 need not be displayed in the first synthesized image G3 in the first state, and a part of the target position 40 may be displayed in the first synthesized image G3. In the case of Fig. 5, for example, a travel locus line m of the vehicle 1 corresponding to the steering angle of the vehicle 1 is displayed. By displaying the travel locus line m, it is possible to make a display in which the driver can easily understand the relationship between the current state of the vehicle 1 (the advancing direction of the vehicle 1) and the target position 40.

Figs. 6 and 7 are views illustrating a state in which the first synthesized image G3 is enlarged from a state in which the target position 40 is acquired, for example, in Fig. 5, when the vehicle 1 moves toward the target position 40 and the distance between the vehicle 1 (vehicle image G1) and the target position 40 becomes equal to or less than a predetermined value, or when the period until the vehicle 1 (vehicle image G1) reaches the target position 40 (for example, the reaching time estimated from the current vehicle speed) becomes equal to or less than a predetermined value. When the vehicle 1 approaches the target position 40, it is easier for the driver to feel a sense of security when the driver can check the periphery situation of the vehicle 1 in more detail. For example, when the vehicle 1 (vehicle image G1) reaches the position 2.5 m before the target position 40, enlargement processing of the first synthesized image G3 is executed. The enlargement processing is gradually started when the distance from the vehicle 1 (vehicle image G1) to the target position 40 or the reaching period is equal to or less than the predetermined value, and for example, the enlargement may be doubled in one second, or the display state of 1 time in Fig. 5 may be switched to the display state of 2 times in Figs. 6 and 7.

In this case, the movement of the vehicle 1 may be performed by the fully automated control executed by the cooperation of the steering system 13, the brake system 18, the drive system 26, and the like so as to move along the movement route 42, or may be performed by semi-automated control in which a part of the operation is left to the driver. Further, it may be performed by manual control that causes the driver to perform a driving operation by providing operational guidance for the steering system 13, the brake system 18, and the drive system 26 so as to move along the movement route 42.

By the way, the driver of the vehicle 1 is more likely to feel a sense of security when checking the surrounding situation of the vehicle 1, when the vehicle speed is high, and when checking a wide range. On the other hand, when the vehicle speed becomes slower, it is easier to feel the sense of security and convenience when the details around the vehicle 1 can be checked. Therefore, as an enlargement condition when performing the enlargement of the first synthesized image G3, the synthesized image control section 36a may determine that the enlargement condition is satisfied and execute the enlargement processing when the distance to the target position 40 or the period (time) described above becomes equal to or less than a predetermined value, and when the vehicle speed acquired by the vehicle speed acquisition section 30d becomes equal to or less than a predetermined value (for example, 3 km/h or less). In this case, for example, since the enlargement display is performed in a state where the speed is sufficiently reduced, it is possible to perform a display that makes it easier to improve the sense of security during the check. Further, the first synthesized image G3 is enlarged when the vehicle 1 is slowed down or stopped at a position far from the target position 40 for some reason, so that it is possible to avoid the disadvantage that it becomes difficult to recognize the positional relationship between the vehicle image G1 and the target position 40.

When the first synthesized image G3 is enlarged and displayed as illustrated in Fig. 6, the synthesized image control section 36a sets an enlargement base point CP as illustrated in Fig. 5, for example. The enlargement base point CP is set to a position shifted from the center of the vehicle image G1 toward the direction in which the target position 40 is present, according to the relative angle between the vehicle 1 and the target position 40, for example. For example, the enlargement base point CP is set at a position distant from the vehicle image G1 as the relative angle is larger. Further, in another example, the synthesized image control section 36a sets the enlargement base point CP at a position shifted from the center of the vehicle image G1 toward the advancing azimuth of the vehicle 1 according to the advancing azimuth of the vehicle 1 (direction in which the vehicle 1 faces). For example, as the steering angle (tire angle) of the vehicle 1 is large and the vehicle image G1 is not directly facing the target position 40, the enlargement base point CP is set at a position distant from the vehicle image G1.

When the enlargement display of the first synthesized image G3 is performed in the limited display region of the display device 8, while it becomes easier to recognize the details around the vehicle image G1, the display range (field of view) around the vehicle image G1 becomes narrower. In a case where the vehicle 1 is heading to the target position 40, when the attention level is compared in the direction in which the target position 40 is present and in the opposite direction, the attention level in the opposite direction is lower. The synthesized image control section 36a shifts the display position of the first synthesized image G3 in the direction opposite to the direction in which the target position 40 is present, widens the display range (field of view) on the side in which the target position 40 is present, and enables a wider range of the display. That is, a display for improving the visibility of the target position 40 is performed. As illustrated in Fig. 6, the enlargement base point CP is set on the side of the target position 40 from the vehicle image G1, and while enlarging the enlargement base point CP as a center, the enlargement base point CP is moved to a substantially center position of the first synthesized image G3. As a result, the vehicle image G1 is enlarged while moving in a direction of the corner of the first synthesized image G3, and it becomes easier to check the surrounding situation. Further, since the target position 40 is also enlarged at the same time, it is possible to display the first synthesized image G3 in which the periphery of the target position 40 can be easily checked.

Fig. 7 is an exemplary and schematic view for explaining another example in which the first synthesized image G3 is enlarged and displayed by the synthesized image control section 36a. In the case of Fig. 7, when the above-described enlargement condition is satisfied, the enlargement processing is also executed based on the set enlargement base point CP in Fig. 5. In the case of Fig. 7, the synthesized image control section 36a horizontally moves the display position of the vehicle image G1 in the display region of the display device 8 in the direction opposite to the direction in which the target position 40 is present according to the relative angle between the vehicle 1 (vehicle image G1) and the target position 40, or according to the advancing azimuth of the vehicle 1 (vehicle image G1). In the case of Fig. 7, the horizontal movement amount Y is determined according to the angle θ₁ (relative angle between the vehicle 1 (vehicle image G1) and the target position 40) formed by a direction line L₁ that connects a position P₁ that is substantially the center position of the target position 40 and a position P₂ that is the center of the rear vehicle wheel shaft of the vehicle image G1, and a center line L₂ which passes through substantially the center of the vehicle image G1 (vehicle 1) in the vehicle width direction and extends in the vehicle front-rear direction. In Fig. 7, the center line L₂ of the vehicle image G1 after the enlargement display is displayed so as to be shifted from the center line L₀ indicating the substantially center in the vehicle width direction in the first synthesized image G3 by the horizontal movement amount Y. For example, the position of the virtual viewpoint when the first synthesized image G3 is generated is moved in the direction opposite to the turning direction by the horizontal movement amount Y, and the display of the first synthesized image G3 is shifted. In this case, the synthesized image control section 36a also shifts the display position of the first synthesized image G3 in the direction opposite to the direction in which the target position 40 is present, widens the display range (field of view) on the side in which the target position 40 is present, and enables a wider range of the display. That is, a display for improving the visibility of the target position 40 can be performed.

As illustrated in Fig. 6, when enlarging around the enlargement base point CP, the enlargement base point CP is set at a position distant from the vehicle image G1 as the relative angle is larger. On the other hand, as the vehicle 1 (vehicle image G1) approaches the target position 40 and the relative angle becomes smaller, the enlargement base point CP is set at a position closer to the vehicle image G1. That is, the vehicle image G1 is displayed so that the vehicle image G1 returns to the position of the center line L₀ of the first synthesized image G3. Therefore, when the vehicle 1 (vehicle image G1) moves to the front of the target position 40, the vehicle image G1 comes to be displayed substantially at the center of the first synthesized image G3 while the enlargement ratio decreases, and when the vehicle 1 reaches the target position 40, in the first synthesized image G3, the vehicle image G1 is displayed at a position substantially in the center of the first synthesized image G3, and the vehicle image G1 having a good appearance can be displayed. The same applies when the enlargement base point CP is determined based on the advancing azimuth of the vehicle 1.

Further, the same applies to the case illustrated in Fig. 7, and as the vehicle 1 (vehicle image G1) approaches the target position 40, the angle θ₁ becomes smaller, and the value of the horizontal movement amount Y becomes smaller. That is, the center line L₂ of the vehicle image G1 is displayed so that the vehicle image G1 returns to the position of the center line L₀ of the first synthesized image G3. That is, when the vehicle 1 (vehicle image G1) moves to the front of the target position 40, the vehicle image G1 comes to be displayed substantially at the center of the first synthesized image G3, and when the vehicle 1 reaches the target position 40, in the first synthesized image G3, the vehicle image G1 is displayed at a position substantially in the center of the first synthesized image G3, and the vehicle image G1 having a good appearance can be displayed.

Further, in another embodiment, the synthesized image control section 36a may calculate the horizontal movement amount Y based on the steering angle of the vehicle 1 and the tire angle corresponding to the steering angle, and similarly enlarges the display range on the side in which the target position 40 is present, thereby, it is possible to make a display in which the periphery of the target position 40 can be easily recognized. When the steering system 13 is frequently operated, particularly when the steering system 13 is automatically controlled and the vehicle 1 is moving, fine adjustment of the operation of the steering unit 4 may be frequently performed. As a result, the horizontal movement amount Y frequently changes, and the display of the vehicle image G1 may be easily shaken in the horizontal left-right direction. Therefore, when determining the horizontal movement amount Y based on the steering angle, the processing using the moving average filter may be executed to reduce the shake motion of the vehicle image G1 in the horizontal direction due to the frequent change in the steering angle in the process of calculating the horizontal movement amount Y, for example.

In the examples illustrated in Figs. 5 to 7, for the second synthesized image G6, in order to perform a detailed display of the periphery of the three-dimensional vehicle image G4 by using the three-dimensional display of the three-dimensional vehicle image G4, the enlargement processing based on the relationship with the target position 40 is not performed. Further, in the case of Fig. 7, when the vehicle image G1 (vehicle 1) approaches the target position 40 and is enlarged and displayed, a virtual object 46 (for example, a triangular cone) is displayed in the first synthesized image G3 and the second synthesized image G6 as an indicator that implies stopping the vehicle 1. The virtual object 46 indicated by the triangular cone is an example, and can be changed as appropriate as long as it is an indicator such as a stop board or a guide member that alerts the driver.

As illustrated in Figs. 5 to 7, the indicator control section 36b displays a direction indicator 44 indicating a direction in which the target position 40 is present with respect to the vehicle image G1 to be superimposed on a position related to the vehicle image G1 according to the relative angle between the vehicle 1 and the target position 40. The direction indicator 44 is a rotatable indicator and can be displayed so as to be superimposed as a position related to the vehicle image G1, for example, on the roof of the vehicle image G1 (for example, a substantially center position of the vehicle image G1). As illustrated in Fig. 5, the direction indicator 44 can be displayed at the time the vehicle image G1 and the target position 40 are displayed on the first synthesized image G3. By the display on the direction indicator 44, the direction in which the target position 40 is present, the direction in which the vehicle 1 is directed to move to the target position 40, and the like are clarified, and a display that allows the driver to intuitively recognize the directions can be displayed. In the case of Figs. 5 to 7, the direction indicator 44 is illustrated as an arrow shape, but an indicator other than the arrow may be used as long as the direction in which the target position 40 is present can be implied. Further, although an example is illustrated in which the superimposing position of the direction indicator 44 is on the roof, it may be on the engine hood of the vehicle image G1 or may be a position around the vehicle image G1 that does not overlap the vehicle image G1 as long as the direction in which the target position 40 is present can be implied. Further, in addition to the position related to the vehicle image G1, the direction indicator 44 may be displayed so as to be superimposed on the position of the second synthesized image G6 related to the three-dimensional vehicle image G4, for example, on the roof of the three-dimensional vehicle image G4, or the like.

Fig. 8 is an exemplary and schematic view for explaining an example of determining a display posture (rotational direction) of the direction indicator 44. When the vehicle 1 (vehicle image G1) moves with respect to the target position 40 that is a fixed position, the relative position of the vehicle 1 (vehicle image G1) with respect to the target position 40 changes. That is, the direction facing the target position 40 from the vehicle image G1 changes as the vehicle 1 (vehicle image G1) moves. The direction indicator 44 rotates, for example, on the vehicle image G1 in response to the change in the relative position. For example, the rotation center of the direction indicator 44 is defined as a position P₃, and the center position of the target position 40 displayed in an elliptical shape is defined as a position P₁. Further, a line connecting the positions P₁ and P₃ is defined as a direction line L₃. On the other hand, in the vehicle image G1, a line that passes through substantially the center in the vehicle width direction and extends in the vehicle front-rear direction is defined as a center line L₄. In this case, the angle θ₂ formed by the direction line L₃ and the center line L₄ is the relative angle between the vehicle image G1 (vehicle 1) and the target position 40. Further, assuming that the position P₃ of the rotation center is on the center line L₄, the direction indicator 44 can indicate the position (direction) in which the target position 40 is present by rotating the direction indicator 44 by an angle θ₂ from the center line L₄ in the direction in which the target position 40 is present. The indicator control section 36b reads out data indicating the direction indicator 44 from the storage unit such as the ROM 14b, for example, and rotates and displays the data according to the angle θ₂. In this way, by displaying the direction indicator 44, a display that makes it easy to ascertain the direction of the target position 40 that is heading from now on is possible, it is easy to increase the driver's sense of security during driving, and it is possible to realize an image display that makes it easy for the driver to feel that the burden during the driving is reduced.

In Fig. 8, an example is illustrated in which the direction indicator 44 is displayed based on the relative angle (θ₂) determined by a substantially center position (position P₃) of the vehicle image G1 and a position P₁ that is a center position of the target position 40, but in another embodiment, the indicator control section 36b may determine the direction indicated by the direction indicator 44 according to the advancing azimuth of the vehicle 1. For example, when the driver recognizes the position of the target position 40, the driver determines a steering angle of the vehicle 1 so as to move toward the target position 40. Further, by determining the direction (rotational direction) indicated by the direction indicator 44 based on the steering angle of the vehicle 1, the display of the direction indicator 44, in which the driver has little deviation from the current feeling of operating the steering unit 4, can be possible, and it is possible to display the position of the target position 40 so that the driver can easily recognize the position without any discomfort. When determining a rotational direction of the direction indicator 44 based on the steering angle, the processing using the moving average filter may be executed to reduce excessive rotation of the direction indicator 44 due to the frequent adjustment (change) in the steering angle in the process of calculating the rotational direction, for example. The direction indicated by the direction indicator 44 may be determined based on the tire angle that can be calculated from the steering angle instead of the steering angle. Since the tire angle is an angle at a position in front of the vehicle image G1, when the angle is used as it is as the angle of the direction indicator 44 displayed at the position on the roof of the vehicle image G1, there is a case in which a slight angle deviation occurs, resulting in an unnatural display. In such a case, for example, the tire angle may be corrected to reduce the unnaturalness. For example, a half angle of the tire angle may be defined as the rotation angle of the direction indicator 44.

Further, the indicator control section 36b may determine a direction (rotation angle) indicated by the direction indicator 44 based on the posture of the vehicle 1 (the direction in which the vehicle 1 faces) when the vehicle is traveling a predetermined distance (for example, 2 m) at the current steering angle of the vehicle 1, and display the direction on the roof of the vehicle image G1 at the current position. For example, when calculating a movement route when the vehicle 1 is heading to the target position 40, the route setting section 34 estimates the posture of the vehicle 1 (a direction in which the vehicle 1 faces) for each movement position according to the current steering angle of the vehicle 1, and determines a route to the target position 40 while checking not to contact with the surrounding obstacles. Therefore, it is possible to acquire the information indicating the posture of the vehicle 1 at each position when setting the movement route. By determining the direction indicated by the direction indicator 44 using this information, the direction indicator 44 indicating the direction of the target position 40 can be displayed without a sense of discomfort.

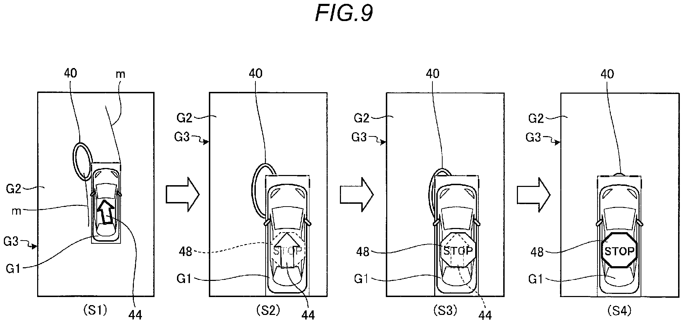

Further, when the direction indicator 44 is displayed, as illustrated in Fig. 9, and when the vehicle 1 approaches the target position 40, the indicator control section 36b may display the stop indicator 48 instead of the direction indicator 44. For example, when the distance from the vehicle image G1 (vehicle 1) to the target position 40 is not equal to or less than a predetermined value, as illustrated in the scene S1 in Fig. 9, the indicator control section 36b defines the direction indicator 44, for example, as transmittance "0", and performs a clear display. In the case of scene 1 in Fig. 9, it illustrates an example in which the start position (for example, the position 2.5 m before the target position 40) of the enlargement display processing or the movement processing of the first synthesized image G3 by the above-described synthesized image control section 36a has not been reached.

When the vehicle 1 (vehicle image G1) approaches the target position 40, and the distance from the vehicle image G1 (vehicle 1) to the target position 40 becomes equal to or less than a predetermined value (for example, 1 m as the indicator switching start position), as illustrated in a scene S2 in Fig. 9, the display transmittance of the direction indicator 44 is changed to be higher according to the remaining distance with respect to the target position 40. Further, the display of the stop indicator 48 that implies stopping at the target position 40 is started so as to overlap the display of the direction indicator 44. In this case, in the case where the display transmittance is high, that is, the display transmittance is defined as "1" when it is completely transparent, the stop indicator 48 starts the display at the display transmittance "0.9", for example, and gradually lowers the display transmittance. For example, when the display transmittance of the direction indicator 44 is "α", the display transmittance of the stop indicator 48 is defined as "1-α". The scene S2 is in a state in which the stop indicator 48 is displayed lighter as compared with the direction indicator 44. In the case of scene 2 in Fig. 9, since the start position of the enlargement display processing or the movement processing has already been reached, the state where the enlargement display processing and the movement processing of the first synthesized image G3 are being executed by the synthesized image control section 36a is illustrated.

Further, when the distance from the vehicle image G1 (vehicle 1) to the target position 40 decreases, the stop indicator 48 is displayed darker as compared with the direction indicator 44 as illustrated in the scene S3. Further, when the vehicle image G1 (vehicle 1) reaches the position of the target position 40, as illustrated in the scene 4, the display transmittance of the direction indicator 44 becomes "1", and the display transmittance of the stop indicator 48 becomes "0". That is, the direction indicator 44 is hidden, the stop indicator 48 is clearly displayed, and the switching of the indicator display is completed. When the vehicle image G1 (vehicle 1) reaches the position of the target position 40, the display of the display mode of the stop indicator 48 may be emphasized. For example, the display color may be emphasized color (for example, red) or may be displayed in a blinking manner to provide a display that is easily recognized by the driver.

In a case where the vehicle image G1 (vehicle 1) reaches the target position 40 and it is confirmed that the vehicle 1 has stopped, the indicator control section 36b may hide the stop indicator 48 when a predetermined period (for example, 3 seconds) has elapsed or when the switching operation of the gear shift operation unit 7 is confirmed by the shift sensor 21. Further, the synthesized image control section 36a may once cancel the enlargement display processing executed with respect to the first synthesized image G3. As the vehicle image G1 (vehicle 1) approaches the target position 40, the movement amount from the center line L₀ gradually decreases, and the vehicle image G1 returns to the center position of the first synthesized image G3. Thereafter, when there is another stop target position for turning back in order to move to the parking target position, or when it is possible to directly move to the parking target position, the stop target position or the parking target position is set as a new target position 40. The image processing section 28 performs the display of the direction indicator 44 with respect to the target position 40 or the enlargement display processing or the movement processing of the first synthesized image G3 as described above.

As illustrated in Fig. 9, as the vehicle image G1 (vehicle 1) approaches the target position 40, the direction indicator 44 is oriented in the front-rear direction of the vehicle image G1, thereby the importance of the direction indicator 44 that implies the direction in which the target position 40 is present is low. Therefore, the display transmittance of the direction indicator 44 is gradually increased, and the indicator that has low importance is hidden. On the other hand, as the vehicle image G1 (vehicle 1) approaches the target position 40, the display transmittance is gradually decreased and the display of the stop indicator 48 is darkened. As a result, it is possible to provide a display that makes it easier for the driver to recognize that the stop indicator 48 is more important and that the stop position is approaching.

In the case of the display illustrated in Fig. 9, an example is illustrated in which, as the vehicle image G1 approaches the target position 40, a display in which one of the direction indicator 44 and the stop indicator 48 is emphasized is realized while changing the display transmittances of the direction indicator 44 and the stop indicator 48. In this case, for example, when the vehicle 1 approaches the target position 40 and the degree of recognition of the target position 40 increases, the transparency of the direction indicator 44 increases, and the display content of the first synthesized image G3 can be simplified. As a result, the display can be made easier to recognize. Further, the stop indicator 48 is displayed with a highlighted display as the vehicle 1 approaches the target position 40. As a result, it is possible to provide a display that allows the driver to easily and clearly recognize the approach of the target position 40 at which the vehicle should stop. In another example, the display of the stop indicator 48 may be omitted, and the indicator control section 36b may change the display transmittance of the direction indicator 44 to be higher as the vehicle 1 approaches the target position 40. Conversely, the display of the direction indicator 44 may be omitted, and the indicator control section 36b may change the display transmittance of the stop indicator 48 to be lower as the vehicle 1 approaches the target position 40. In any case, by the change in the display mode of the indicator, it is possible to provide a display that allows the driver to easily recognize that the target position 40 is approaching. Further, it is possible to prevent the display content from becoming excessively complicated, and to realize a display that is easier to recognize. Although an example of displaying the stop indicator 48 while gradually lowering the display transmittance is illustrated, regardless of whether or not the direction indicator 44 is displayed, the stop indicator 48 may be displayed at a constant display transmittance, for example, the transmittance "1" at the timing of stopping the vehicle 1. In this case as well, by the change in the display mode of the indicator, it is possible to provide a display that allows the driver to easily recognize that the target position 40 is approaching, and to prevent the display content from becoming excessively complicated and realize a display that is easier to recognize.

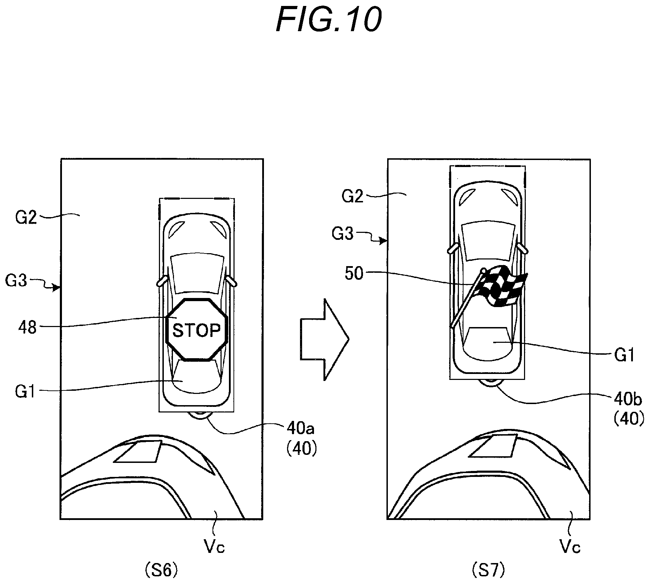

In the above-described embodiment, when the vehicle image G1 (vehicle 1) approaches the target position 40, for example, an example is illustrated in which an octagonal stop indicator 48 displayed as "STOP" is displayed. In another embodiment, the type of the stop indicator 48 may be changed according to the meaning (type) of the target position 40. For example, the stop indicator 48 illustrated in the scene S4 in Fig. 9 or the scene S6 in Fig. 10 is an indicator displayed when approaching the target position 40 (intermediate target position 40a), which is set in the process of moving toward the final parking target position (final target position), for example, for turning back or for a temporary stop. In contrast to this, the stop indicator 50 illustrated in the scene S7 in Fig. 10 is an indicator displayed when approaching the final parking target position (final target position 40b) (for example, when approaching the movement completion position at the time of parallel parking with another vehicle Vc). In this case, the stop indicator 50 is, for example, a checkered flag that makes the driver imagine moving (parking) completion (goal), but if the type is different from that when approaching the intermediate target position 40a, it can be appropriately changed. As described above, by selectively using the stop indicator 48 and the stop indicator 50 depending on whether it is the intermediate target position 40a or the final target position 40b, it is possible to provide a display that allows the driver to more clearly recognize the current situation, that is, whether the current stop position is the intermediate target position 40a or the final target position 40b. Further, it is possible to provide a display that makes it easier to clearly recognize whether the movement (guidance assistance) of the vehicle 1 is completed.

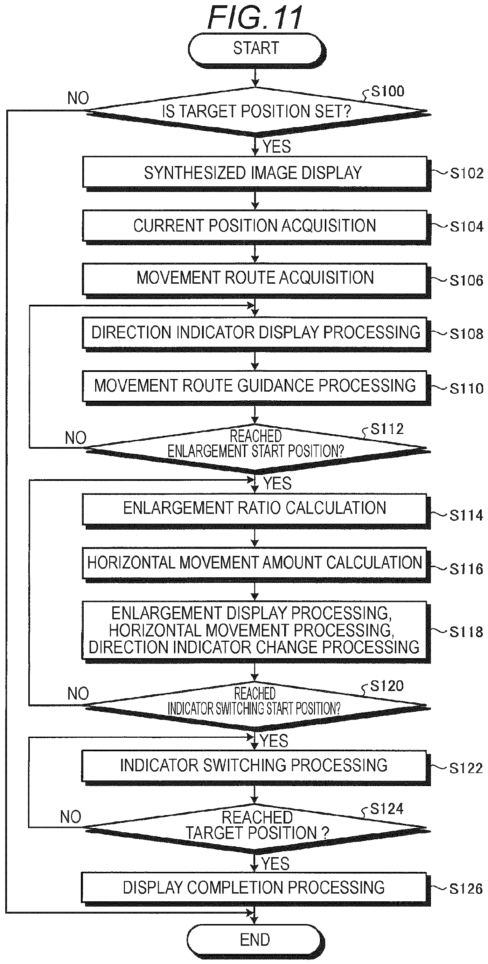

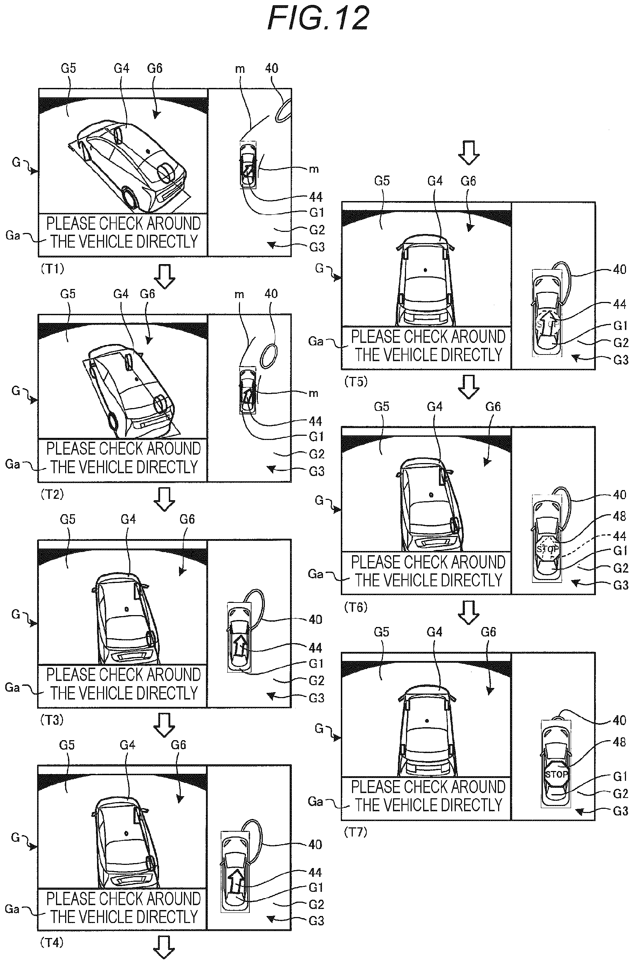

A flow of a series of image processing by the image processing device (image processing section 28) of the present embodiment configured as described above will be described using the exemplary flowchart illustrated in Fig. 11 and the exemplary display transition illustrated in Fig. 12.

First, the image processing section 28 checks whether the target position is set by the target position setting section 32 (S100). For example, when the operation requesting traveling assistance is performed by the driver, it is checked whether the parking target position, the stop target position for turning back, or the like (for example, the target position 40) is set. When the target position 40 is set (Yes in S100), the synthesized image control section 36a generates a first synthesized image G3 and a second synthesized image G6 (S102). That is, the synthesized image control section 36a generates a bird's-eye viewed periphery image G2 based on the captured image captured by the image capturing unit 15 acquired by the image acquisition section 30a. Further, the synthesized image control section 36a superimposes the display data of the vehicle image G1 read from the storage unit such as the ROM 14b on the periphery image G2 to generate the first synthesized image G3. Similarly, the synthesized image control section 36a generates a bird's-eye viewed three-dimensional periphery image G5 based on the captured image captured by the image capturing unit 15 acquired by the image acquisition section 30a. Further, the synthesized image control section 36a superimposes the display data of the three-dimensional vehicle image G4 read from the storage unit such as the ROM 14b on the three-dimensional periphery image G5 to generate the second synthesized image G6.

Subsequently, the target position setting section 32 acquires a current position of the vehicle 1 based on the position that uses the radio waves received by the GPS receiver 25, the start position of traveling assistance, or the like as a reference (S104). Further, the route setting section 34 acquires the movement route for guiding the vehicle 1 (vehicle image G1) from the current position of the vehicle 1, which is acquired in S104, to the target position 40 (S106).

Based on the relative angle between the current vehicle 1 (vehicle image G1) and the target position 40, the advancing azimuth of the vehicle 1, or the like, the indicator control section 36b executes the display processing of the direction indicator 44 that implies the direction in which the target position 40 is present (S108), and generates the first synthesized image G3 as illustrated in the scene T1 in Fig. 12. Thereafter, with respect to the vehicle 1, any one of the fully automated control, the semi-automated control, and the manual control is performed so as to move toward the target position 40, and the guidance processing according to the movement route is executed (S110). A scene T2 in Fig. 12 illustrates a state in which the vehicle image G1 approaches the target position 40 by the synthesized image control section 36a. In this case, the indicator control section 36b performs the rotation display control of the direction indicator 44 so as to correspond to the movement of the vehicle image G1.

Furthermore, the synthesized image control section 36a determines whether the vehicle image G1 (vehicle 1) has approached the target position 40 and has reached the enlargement start position as the guided movement of the vehicle 1 is continued (S112). That is, it is determined whether the distance from the target position 40 to the vehicle image G1 (vehicle 1) has reached a predetermined value or less (for example, a position corresponding to 2.5 m in front). When the vehicle 1 reaches the enlargement start position (Yes in S112), the synthesized image control section 36a calculates, for example, the enlargement ratio of the first synthesized image G3 according to the distance to the target position 40 (S114). Further, the enlargement base point CP is set based on the relative angle between the vehicle image G1 (vehicle 1) and the target position 40, the advancing azimuth of the vehicle 1, and the like, and then the horizontal movement amount Y is calculated (S116), for example. As illustrated in scenes T3 and T4 in Fig. 12, the synthesized image control section 36a executes the enlargement display processing based on the calculated enlargement ratio of first synthesized image G3, the movement processing based on the horizontal movement amount Y, and the change processing of rotation display of the direction indicator 44 (S118).

Further, when the vehicle image G1 (vehicle 1) approaches the target position 40 and reaches the indicator switching start position (for example, 1 m before the target position 40) for switching the display from the direction indicator 44 to the stop indicator 48 (Yes in S120), as illustrated in scenes T5, T6, and T7 in Fig. 12, the indicator control section 36b changes the display transmittance of the direction indicator 44 so that the display transmittance becomes higher. At the same time, the indicator control section 36b changes the display transmittance of the stop indicator 48 so as to lower the display transmittance, and executes the indicator switching processing between the direction indicator 44 and the stop indicator 48 (S122). The indicator switching processing is gradually executed until the vehicle image G1 (vehicle 1) reaches the target position 40 (No in S124). When the vehicle image G1 (vehicle 1) reaches the target position 40 (Yes in S124), as illustrated in the scene T7 in Fig. 12, the indicator control section 36b displays the stop indicator 48 clearly instead of the direction indicator 44. Thereafter, the control section 36 executes a display completion processing (S126). For example, the indicator control section 36b displays the stop indicator 48 for a predetermined period and then hides the stop indicator 48. Further, the synthesized image control section 36a cancels the enlargement display processing. When there is a stop target position for the next turn-back, the new stop target position is set as a target position 40, and the flow in Fig. 11 is executed again. When there is no stop target position for the new turn-back and only the parking target position is present, the parking target position is set to the new target position 40 and the flow of Fig. 11 is executed again. When the stop target position for turning back is not present in the movement route set by the route setting section 34, the parking target position is set as the target position 40 from the beginning.

In S120, when the vehicle image G1 (vehicle 1) has not reached the indicator switching start position (No in S120), the process returns to S114, the display enlargement ratio and the horizontal movement amount Y are recalculated according to the distance to the target position 40, the enlargement display processing and horizontal movement processing are executed, and the display change processing of the direction indicator 44 is continuously executed. Further, in S112, when the vehicle image G1 (vehicle 1) has not reached the enlargement start position (No in S112), the process returns to S108 and the display change processing of the direction indicator 44 based on the relative angle between the current vehicle 1 (vehicle image G1) and the target position 40, the advancing azimuth of the vehicle 1, or the like is continuously executed. In S100, when the target position 40 is not set (No in S100), this flow is ended once, and the process waits for this flow to be executed at the next processing timing.

As described above, according to the image processing device (image processing section 28) of the present embodiment, in a case where the traveling assistance such as a parking assistance is performed and when the driver wants to check the surroundings, an operation for changing the display is not necessary, and an image display that makes it easy to recognize the surrounding situation can be provided.

In the above-described embodiment, the parking assistance has been described as an example, but if the target position 40 is set when the vehicle 1 is to be moved to a predetermined position at a low speed even for purposes other than parking, the same display control can be performed and the same effect can be obtained.

In the above-described embodiment, a display example involving enlargement display processing, movement processing, or the like of the first synthesized image G3 has been illustrated, but in the modification example, at least one of the enlargement display processing and the movement processing of the first synthesized image G3 may be omitted and the direction indicator 44 and the stop indicator 48 may be displayed. For example, the image processing device includes: an image acquisition section that acquires a captured image captured by an image capturing unit that images a periphery of a vehicle; a position acquisition section that acquires a current position of the vehicle and a target position to which the vehicle moves; and a control section that causes a display unit to display a synthesized image including a vehicle image showing the vehicle and a periphery image representing the periphery of the vehicle based on the captured image, in which the control section may display a rotatable direction indicator that indicates a direction in which the target position is present on the vehicle image to be superimposed on a position related to the vehicle image according to a relative angle between the vehicle and the target position, or an advancing azimuth of the vehicle. According to this configuration, for example, it is possible to provide a display that makes it easier to ascertain the situation in the future direction, and it is possible to realize the image processing device that can easily reduce the complexity of the operation.

Further, in a modification example, for example, when displaying the direction indicator, the control section may perform a switching of the indicator display from the direction indicator to the stop indicator by changing the display transmittance of the direction indicator to be higher as the vehicle approaches the target position and by changing the display transmittance of the stop indicator that implies stopping at the target position to be lower. According to this configuration, for example, it is possible to realize an image display that makes it easy for the driver to recognize the approach to the target position, to feel a sense of security during driving, and to feel the reduction of the burden during driving.

An image processing program executed by the CPU 14a described above may be a file with an installable format or an executable format, and may be configured to be provided by being recorded in a computer-readable recording medium such as a CD-ROM, a flexible disk (FD), a CD-R, and a digital versatile disk (DVD).

Furthermore, the image processing program may be stored in a computer connected to a network such as the Internet and may be configured to be provided by being downloaded via the network. Further, the image processing program executed by the CPU 14a may be configured to be provided or distributed via a network such as the Internet.

Although the embodiments and modification examples of this disclosure have been described, these embodiments and modification examples are presented as examples and are not intended to limit the scope of the disclosure. These novel embodiments can be implemented in various other forms, and various omissions, replacements, and changes can be made without departing from the spirit of the disclosure. These embodiments and modification examples thereof are included in the scope and the gist of the disclosure, and are also included in the disclosure described in the claims and the scope equivalent thereto.

An image processing device includes: an image acquisition section (30a) that acquires a captured image captured by an image capturing unit (15, 15a, 15b, 15c, 15d) that images a periphery of a vehicle (1); a position acquisition section (30b) that acquires a current position of the vehicle and a target position (40) to which the vehicle moves; and a control section (36) that causes a display unit (8) to display a synthesized image (G3) including a vehicle image (G1) showing the vehicle, and a periphery image (G2) representing the periphery of the vehicle based on the captured image. In accordance with at least one of a distance between the current position of the vehicle and the target position, or a period until the vehicle reaches the target position, the control section causes the synthesized image to be displayed by being enlarged more than when the target position is acquired.

## Claims

1. An image processing device comprising:
an image acquisition section (30a) that acquires a captured image captured by an image capturing unit (15, 15a, 15b, 15c, 15d) that images a periphery of a vehicle (1);
a position acquisition section (30b) that acquires a current position of the vehicle and a target position (40) to which the vehicle moves; and
a control section (36) that causes a display unit (8) to display a synthesized image (G3) including a vehicle image (G1) showing the vehicle, and a periphery image (G2) representing the periphery of the vehicle based on the captured image, wherein
in accordance with at least one of a distance between the current position of the vehicle and the target position, or a period until the vehicle reaches the target position, the control section causes the synthesized image to be displayed by being enlarged more than when the target position is acquired.

2. The image processing device according to claim 1, wherein
the control section enlarges the synthesized image with a position shifted from a center of the vehicle image displayed in the synthesized image as an enlargement base point.

3. The image processing device according to claim 2, wherein
in accordance with a relative angle between the vehicle and the target position, the control section enlarges the synthesized image with a position shifted from the center of the vehicle image toward a direction in which the target position is present as the enlargement base point.

4. The image processing device according to claim 2, wherein
in accordance with an advancing azimuth of the vehicle, the control section enlarges the synthesized image with a position shifted from the center of the vehicle image toward the advancing azimuth of the vehicle as the enlargement base point.

5. The image processing device according to any one of claims 1 to 4, wherein
in accordance with a relative angle between the vehicle and the target position, the control section causes a rotatable direction indicator (44) that indicates a direction in which the target position is present with respect to the vehicle image to be superimposed and displayed on a position related to the vehicle image.

6. The image processing device according to any one of claims 1 to 3, wherein
in accordance with an advancing azimuth of the vehicle, the control section causes a rotatable direction indicator (44) that indicates a direction in which the target position is present with respect to the vehicle image to be superimposed and displayed on a position related to the vehicle image.

7. The image processing device according to claim 5 or 6, wherein
as the vehicle approaches the target position, the control section changes a display transmittance of the direction indicator such that the display transmittance becomes higher.

8. The image processing device according to any one of claims 5 to 7, wherein
when the distance to the target position with respect to the vehicle image is equal to or less than a predetermined value, the control section causes a stop indicator (50) that implies stopping the vehicle at the target position to be displayed.

9. The image processing device according to claim 8, wherein
as the vehicle approaches the target position, the control section changes a display transmittance of the stop indicator such that the display transmittance becomes lower than when displaying is started.

10. The image processing device according to claim 9, wherein
the control section performs a switching of an indicator display from the direction indicator to the stop indicator by changing a display transmittance of the direction indicator to be higher and changing the display transmittance of the stop indicator to be lower as the vehicle approaches the target position.

11. The image processing device according to any one of claims 8 to 10, wherein
when displaying the stop indicator, the control section changes a type of the stop indicator between when the target position is a final target position and when the target position is an intermediate target position set in the course of moving toward the final target position.

12. The image processing device according to any one of claims 1 to 11, wherein
the synthesized image is a bird's-eye view image viewing the vehicle image and the periphery image from above.
